Europäisches Patentamt

**European Patent Office**

Office européen des brevets

(11) Publication number: **0 082 997**
**A1**

(12) **EUROPEAN PATENT APPLICATION**

(21) Application number: **82111393.3**

(22) Date of filing: **09.12.82**

(51) Int. Cl.³: **B 60 Q 1/14**

(30) Priority: **24.12.81 JP 208085/81**

(43) Date of publication of application:
**06.07.83 Bulletin 83/27**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(71) Applicant: **NILES PARTS CO., LTD.**
**9-16, Higashikojiya 4-chome**
**Ota-ku Tokyo(JP)**

(72) Inventor: **Ikegaya, Shuzi**
**149-3, Shake**
**Ebina-shi Kanagawa-ken(JP)**

(72) Inventor: **Honjo, Kazumi**
**27-4-306, Kugahara 5-chome Ota-ku**
**Tokyo(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Structure for attaching a combination switch unit to a steering column.**

㊅ A combination switch unit fixed to a steering column of an automotive vehicle, comprises a switch box 10a for arranging the combination switch unit, a cylindrical pipe shape of fixing portion 10d having a resilient piece 10f, the fixing portion 10d being formed integrally with and extending from a bottom portion of the switch box, a locating projection 11 formed on the resilient piece 10f of the fixing portion, the steering column having a locating opening or recess portion formed therein in such a manner that the locating or recess portion of the steering column can mate exactly and engage with the locating projection 11 of the fixing portion, and a binding band for fixing the fixing portion to the steering column.

FIG.4

PATENTANWALTE
GRÜNECKER DR KINKELDEY DR STOCKMAR
DF. SCHUMANN JAKOB DR. BEZOLD MEISTER
HILGERS DR. MEYER PLATH

STRUCTURE FOR ATTACHING A COMBINATION SWITCH UNIT TO

A STEERING COLUMN

## BACKGROUND OF THE INVENTION

This invention relates to a structure for attaching a combination switch to a steering column of an automotive vehicle.

In conventional automotive vehicles, plural switches for a direction indicator lamp, head-light, wiper and others are usually located at one place and assembled in one switch box as a unit. Such switches are called a combination switch unit which is attached to a steering column near a steering wheel in order to facilitate switching operations.

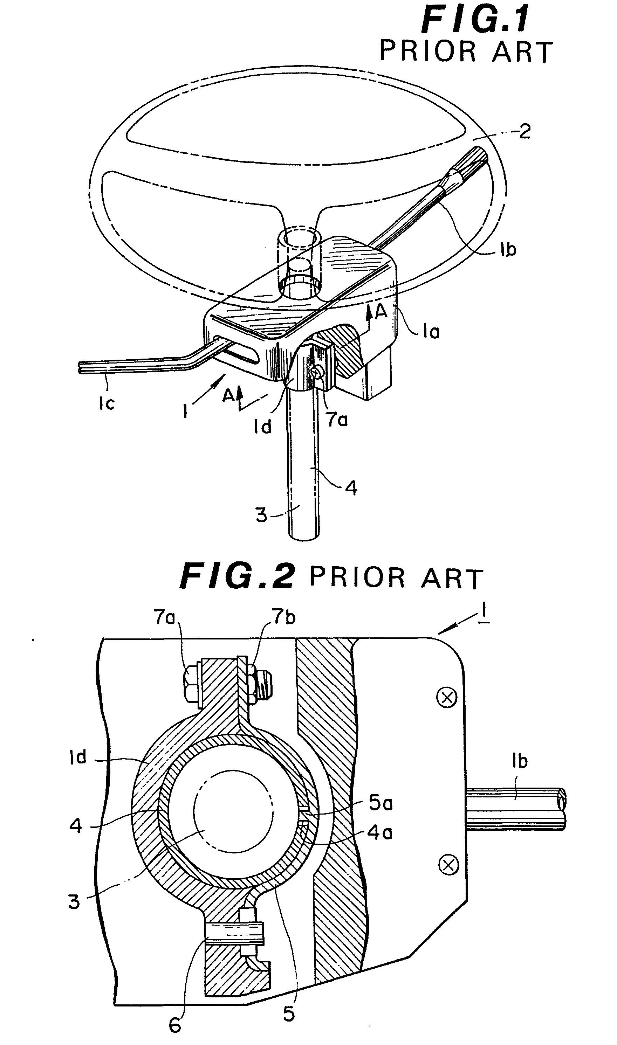

Fig. 1 shows such a conventional combination switch unit attached to a steering column. Fig. 2 is a sectional view taken along the line A-A of Fig. 1. The reference numeral 1 generally designates a combination switch unit for a direction indicator lamp, a head-light and a wiper (not shown). The combination switch unit 1 includes a switch box 1a, an operation lever 1b placed at a side of the switch box 1a for operating a direction indicator lamp switch and a head-light switch (not shown), and an operation level 1c for operating a wiper switch (not shown). A fixing portion 1d is formed in the switch box 1a for attaching the combination switch unit 1 to a steering column 4. The fixing portion 1d is formed with a hole for

.fixing it. A steeing wheel 2 is placed above an upper portion of the combination switch unit 1 as shown by the chain line in Fig. 1. The steering column 4 is placed around a steering shaft 3. The steering column 4 has an opening 4a (Fig. 2) for locating the combination switch unit 1 in position.

In Fig. 2, a binding band 5 is made of a metal and used for attaching the combination switch unit 1 to the steering column 4. The binding band 5 has at one end thereof an opening corresponding in position to an opening of the fixing portion 1d of the combination switch 1 through which a screw 7a is to pass. The binding band 5 also has at its intermediate portion a projection 5a for locating the combination switch unit 1 in such a way that it cooperates with the opening 4a of the steering column 4. An auxiliary band 6 made of a metal is used so as to fix the other end of the binding band 5 to the fixing portion 1d. The reference numeral 7b denotes a nut to be used togehter with the screw 7a.

In order to attach the combination switch unit 1 to the steering column 4, the fixing portion 1d of the combination switch unit 1 is moved along the steering column 4. When the fixing portion 1d comes to a predetermined position of the steering column 4, the binding band 5 is attached to the fixing portion 1d of the combination switch unit 1 so as to bind the steering column 4. First, one end of the binding band 5 is

tentatively fixed by means of the auxiliary band 6. Thereafter, the combination switch unit 1 is rotated along the steering column 4 until the projection 5a mates and engages with the opening 4a of the steering column 4. Finally the fixing screw 7a is screwed with the opening of the fixing portion 1d of the combination switch unit 1. By screwing the nut 7b with the screw 7a, the binding band 5 is forced to bind the steering column 4 to the fixing portion 1d of the combination switch unit 1. As a result, the combination switch unit 1 is properly fixed to the steering column 4.

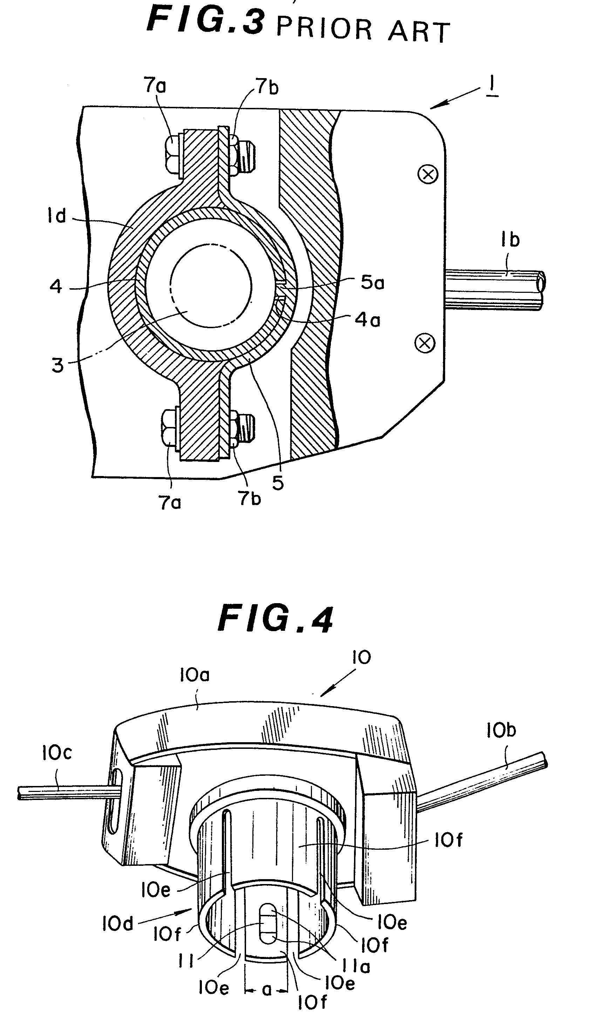

Fig. 3 shows another conventional combination switch unit 1 attached to a steering column 4. The same references designate the same or corresponding members as in Fig. 2. Two openings though which screws 7a pass are formed in both ends of the fixing portion 1d of the combination switch unit 1. The binding band 5 also has two holes corresponding thereto at both ends thereof.

When the combination switch unit 1 is moved along the steering column 4 to a predetermined position, one of the screws 7a is inserted into one of the openings of the fixing portion 1d of the combination switch unit 1 and screwed with the nut 7b. After the projection 5a for locating the binding band 5 mates exactly with the opening 4a of the steering column 4, the binding band 5 is fixed by means of the other nut 7b and screw 7a.

In such conventional structures, the binding

·band 5 is completely separate from the combination switch unit 1. In addition, the projection 5a which is means for locating the combination switch unit 1 is formed on the binding band 5. For such a reason, usually some clearance is formed between the fixing portion 1d of the combination switch unit 1 and the binding band 5 so that, when the combination switch unit 1 is rotated around the steering column 4 in order to locate the combination switch unit 1, particularly if the combination switch unit 1 slightly moves, the projection 5a of the binding band 5 does not move precisely. It is difficult to check exactly the time when the projection 5a of the binding band 5 mates or engages with the opening 4a of the steering column 4.

Accordingly, the locating operation is difficult and requires long time. Before the projection 5a of the binding band 5 mates exactly with the opening 4a of the steering column 4, an operator is apt to misunderstand that they were mated with each other. In such a case, the binding band 5 is fixed in a wrong position.

SUMMARY OF THE INVENTION

It is an object of this invention to provide a structure for attaching a combination switch unit to a steering column of an automotive vehicle in which a switch box can be easily and precisely located with respect to the steering column so as to facilitate assembling thereof.

BRIEF DESCRIPTION OF THE DRAWINGS

This invention will become more apparent from the

following description of a preferred embodiment of this invention when read in conjunction with the accompanying drawings in which:

Fig. 1 is a schematic perspective view showing a conventional combination switch unit attached to a steering column of an automotive vehicle;

Fig. 2 is a sectional view taken along the line A-A of Fig. 1;

Fig. 3 is a sectional view showing another conventional combination switch unit attached to the steering column, corresponding to Fig. 2;

Fig. 4 is a perspective view showing a combination switch unit attached to a steering column of an automotive vehicle according to this invention;

Fig. 5 is a perspective view showing a binding band for attaching the combination switch unit shown in Fig. 4;

Fig. 6 is a sectional view showing a condition in which the binding band shown in Fig. 5 is wound around the fixing portion of the combination switch unit;

Fig. 7A is a sectional view showing a condition in which the steering column is just to be attached to the combination switch unit, corresponding to Fig. 6; and

Fig. 7B is a sectional view showing a condition in which the combination switch unit has been attached to the steering column.

DETAILED DESCRIPTION OF THE PREFERRED EMBODIMENT

Referring now to Fig. 4, a combination switch unit 10 according to this invention has a switch box 10a. A plurality of switches for a direction indicator lamp, a head-light, a wiper and others are arranged inside of the switch box 10a in a conventional manner although not shown. An operation lever 10b for operating the direction indicator lamp switch, the head-light switch and other switches, and an operation lever 10c for operating the wiper switch are provided at opposite sides of the switch box 10a. Such a construction of the switch box 10a is substantially the same as in the prior art combination switch unit so that it will not be explained in detail.

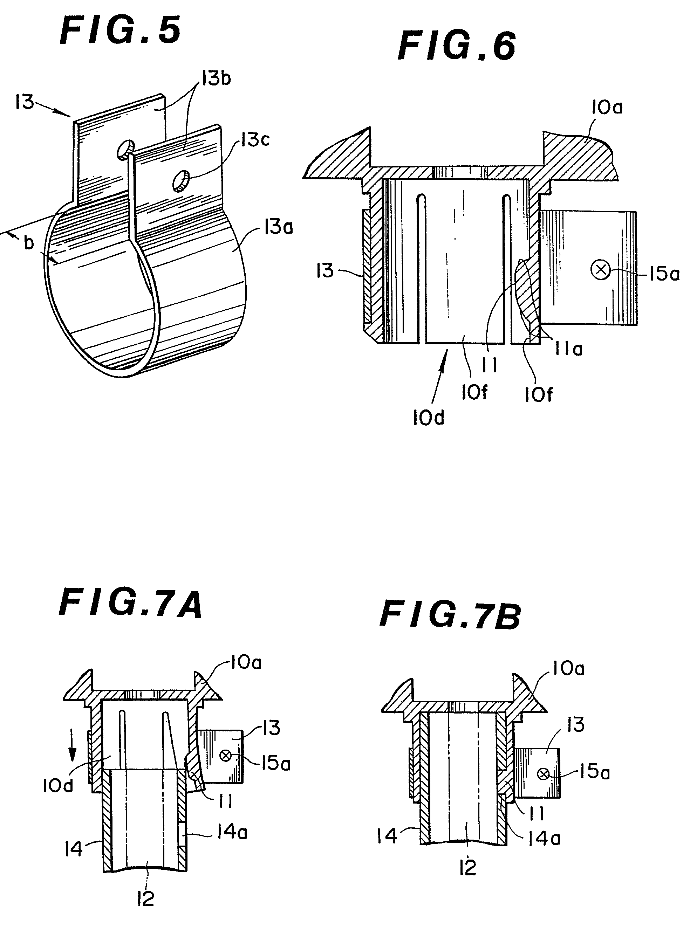

As shown in Figs. 4 and 6, a cylindrical pipe shape of fixing portion 10d is formed at and extends downwardly from a lower central portion of the switch box 10a. The fixing portion 10d has four resilient pieces 10f formed by four slits 10e. A locating projection 11 is provided at an inner central portion of one piece 10f among those resilient pieces 10f. The resilient piece 10f having the locating projection 11 has width "a". The locating projection 11 has a pair of tapered surfaces 11a at both opposite upper and lower sides thereof as best shown in Fig. 6.

Fig. 5 shows a binding band 13 which is used to fix the combination switch unit 10 to a steering column 4 of an automotive vehicle (Fig. 1). The binding band 13 has

a band body 13a and a pair of binding portions 13b each integrally formed with the band body 13a. The distance between the two binding portions 13b is "b". A binding opening 13c is formed in a central portion of each binding portion 13b.

Referring to Figs. 6, 7A and 7B, the operation of attaching the combination switch unit 10 to the steering column 14 will be explained hereinafter.

Before they are assembled, the binding band 13 is tentatively attached to the fixing portion 10d of the combination switch unit 10 as shown in Fig. 6. In this condition, the screw 15a is loosely inserted into one of the binding openings 13c of the binding portions 13b of the binding band 13, and the width "a" of the resilient piece 10f is smaller than the distance "b" between the two binding portions 13b.

After the steering column 14 is inserted into the fixing portion 10d of the combination switch unit 10, the combination switch unit 10 is pushed downwardly in the direction shown by the arrow in Fig. 7A. The opposite tapered surfaces 11a of the locating projection 11 on the resilient piece 10f abut against an upper portion of the steering column 14. Thus, the resilient piece 10f having the locating projection 11 is deformed outwardly. The combination switch unit 10 is further moved so that the steering column 14 is inserted into the fixing portion 10d of the combination switch 10 like in Fig. 1. After a lower

·central portion of the switch box 10a of the combination switch unit 10 contacts the upper end of the steering column 14, the combination switch unit 10 is rotated around the steering column 14 until the locating projection 11 on the resilient piece 10f mates exactly with the hole 14a of the steering column 14. When the locating projection 11 engages the locating hole 14a of the steering column 14, some abutting sound is produced. Immediately thereafter, the resilient piece 10f comes to its original position by means of its spring force. An operator can definitely hear such an abutment sound so as to recognize that the combination switch unit 10 is properly set in position to the steering column 14.

As the locating projection 11 is formed on the fixing portion 10d of the combination switch unit 10, no clearance is formed between the combination switch unit 10 and the locating projection 11. Thus, when the combination switch unit 10 is even slightly rotated in order to locate it, such movement of the combination switch unit 10 is directly and precisely transmitted to the locating projection 11.

The combination switch unit 10 and the steering column 14 are bound by the screw 15a until the combination switch unit 10 tightly contacts the steering column 14. At that time, the distance "b" between the two binding portions 13b becomes smaller than the width "a" of the resilient piece 10f. The combination switch unit 10 has

.been properly attached to the steering column 14 as shown in Fig. 7b.

Incidentally, disassembling of those members can be carried out in reverse order. Because the locating projection 11 has the pair of tapered surfaces 11a, disassembling is easy.

Although in the above-stated embodiment the fixing portion 10d of the combination switch unit 10 has four slits 10e, this invention is not limited to such an embodiment only. The fixing portion 10d of the combination switch unit 10 may have any other portion formed with the locating projection which portion can be outwardly deformed.

As can be seen from the foregoing, according to this invention, a switch box is integrally formed with a fixing portion which can be engaged with a steering column of an automotive vehicle. A locating projection is formed on an inner surface of the fixing portion and can engage a recess portion or hole formed in the steering column. The locating projection is positioned at a predetermined position of the fixing portion which can be outwardly deformed resiliently. Therefore, when the combination switch unit is rotated around the steering column for the locating purpose, even slight movement of the combination switch unit can be precisely transmitted to the locating projection. An operator can quickly and precisely check that the locating projection mates and engages with the locating hole (opening) or recess portion of the steering column. For such a reason, locating operation is easy and precise. An operator can avoid miss-operations such that a binding band is bound before the locating projection exactly mates with the locating opening or recess portion of the steering column.

WHAT IS CLAIMED IS:

1.      A structure for attaching a combination switch unit to a steering column of an automotive vehicle, comprising:

a switch box for arranging the combination switch unit;

a fixing portion having a resilient pieces;

the fixing portion being formed integrally with and extending from a bottom portion of the switch box;

a locating projection formed on the resilient piece of the fixing portion;

the steering column having a locating opening or recess portion formed therein in such a manner that the locating opening or recess portion of the steering column can mate exactly and engage with the locating projection of the fixing portion; and

a binding band for fixing the fixing portion to the steering column.

2.      A structure as ddefined in claim 1 wherein the switch box and the fixing portion are made of a synthetic resin.

3.      A structure as defined in claim 1 wherein the locating projection has a tapered surface which is to contact and guide a top portion of the steering column so as to deform smoothly the resilient piece when the steering

·column is inserted into the fixing portion.

4.      A structure as defined in claim 1 wherein the resilient piece is formed by plural slits.

5.      A structure as defined in claim 1, wherein the fixing portion is formed of a cylindrical pipe shape.

6.      A structure as defined in claim 1, wherein the binding band includes a band body having an inner surface corresponding in shape to the steering column and a pair of binding portions each integrally formed with the band body in such a manner that, by using a screw at the binding portions, the band body can fasten the fixing portion onto the steering column.

7.      A structure as defined in claim 5, wherein the binding band includes a band body having an inner surface corresponding in shape to the steering column and a pair of binding portions each integrally formed with the band body in such a manner that, by using a screw at the binding portions, the band body can fasten the fixing portion onto the steering column.

## FIG.1
PRIOR ART

## FIG.2 PRIOR ART

# *FIG.3* PRIOR ART

# *FIG.4*

**FIG.5**

13
13b
13c
13a
b

**FIG.6**

10a
13
15a
11a
10d
10f
11
10f

**FIG.7A**

10a
13
15a
11
10d
14
14a
12

**FIG.7B**

10a
13
15a
14
11
14a
12

0082997

# EUROPEAN SEARCH REPORT

Application number

EP 82 11 1393

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-1 328 392 (PECAZAUX AND KREUTLER) *Figure 1* | 1,4 | B 60 Q 1/14 |
| Y | FR-A-1 436 003 (TORRIX) *Figures 1,2* | 1,4,5 | |
| Y | GB-A-1 488 165 (LUCAS ELECTRICAL LTD.) *Figures 1,2* | 1,4,5 | |
| Y | DE-A-2 513 050 (S.W.F.SPEZIAL FABRIK FÜR AUTOZUBEHÖR GUSTAVRAU GmbH) *Figures 1-4* | 1,4 | |
| A | DE-A-3 040 903 (KABUSHIKI KAISHA TOKAI RIKA DENKI SEISAKUSHO) *Figure 3* | 1 | TECHNICAL FIELDS SEARCHED (Int. Cl. ³) B 60 Q 1/14 B 60 Q 1/40 B 06 Q 1/42 |

The present search report has been drawn up for all claims

| Place of search THE HAGUE | Date of completion of the search 18-03-1983 | Examiner ONILLON C.G.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82